# EUROPEAN PATENT APPLICATION

(11) **EP 3 226 187 A1**
(43) Date of publication of application: **04.10.2017**
(21) Application number: 16198785.4
(22) Date of filing: 15.11.2016
(51) Int. Cl.: G06Q 10/10

(54) **METHOD AND DEVICE FOR INFORMATION PRESENTATION**

(30) Priority: 29.03.2016 CN 201610188938
(71) Applicant: Beijing Xiaomi Mobile Software Co., Ltd., Beijing 100085 (CN)
(72) Inventor: Wang, Qian, Beijing, Beijing 100085 (CN)
(74) Representative: Kudlek, Franz Thomas

(57) **Abstract**

The invention is regarding a method and device for information presentation which pertains to the field of computer technology. The method is about reading (101), when an operating instruction for lighting up the terminal's screen is detected, event information recorded by a predetermined application program installed on the terminal; and displaying (102) system time and the event information simultaneously. So that the user can obtain the related event information without other operations after lighting up the screen. It is convenient for the user to query some event information concerned such as meeting schedule, information reminding event and/or service information.

## Description

### FIELD

The present invention generally relates to the field of computer technology, and more particularly to a method and device for information presentation.

### BACKGROUND

In the current wireless terminals, screen-lock is a means of preventing unintended operations. During the status of screen-lock, the screen displays the current time only to the user once the user lights up the screen. If the user intends to seek for more information, the user has to unlock the screen to get into the operating system panel for relevant information inquiring, or acquire the relevant information from notification column through pulling it down. The operation of acquiring information is more complicated.

### SUMMARY

The present invention provides a method and device for information presentation. The technical solutions are as follows.

According to a first aspect of the present invention, a method for information presentation is provided, which is applied in a terminal, the method comprising: reading, when an operating instruction for lighting up the terminal's screen is detected, event information recorded by a predetermined application program installed on the terminal; and displaying system time and the event information simultaneously.

In an embodiment, the predetermined application program comprises: a memo and/or a mail and/or a calendar and/or an alarm clock and/or a service-oriented application program.

In an embodiment, the event information comprises: a meeting schedule and/or an information reminding event and/or a service information. The term "information reminding event" is especially understood to mean an information reminding the user of an upcoming event. The term "reminding event" is especially understood to mean an event, of which the user is to be reminded.

In an embodiment, reading the event information recorded by the predetermined application program installed on the terminal comprises: reading a reminding event recorded by the memo installed on the terminal; and/or reading the meeting schedule recorded by the mail installed on the terminal; and/or reading the reminding event and/or the meeting schedule recorded by the calendar installed on the terminal; and/or reading a clock alarm event recorded by the alarm clock installed on the terminal; and/or reading the service-oriented application program installed on the terminal, and obtaining an unfinished service information recorded by the service-oriented application program.

In an embodiment, displaying the event information comprises: processing the event information based on current system time and displaying the processed event information.

In an embodiment, processing the event information based on current system time and displaying the processed event information comprises: when the event information is the reminding event, determining a remaining time for reaching the reminding event based on the current system time, and displaying and reminding a user about the remaining time for reaching the reminding event; and/or when the event information is the meeting schedule, determining a remaining time for reaching the meeting based on the current system time, and displaying and reminding the user about the remaining time for reaching the meeting; and/or when the event information is the clock alarm event, determining a remaining time for reaching the clock alarm based on the current system time, and displaying and reminding the user the existence of the clock alarm; and/or when the event information is the service information, determining a waiting time until the service is available based on the current system time, and displaying and reminding the user about the service information.

According to a second aspect of embodiments of the present invention, a device for information presentation is provided for a terminal, which is applied in a terminal, the device comprising: an information obtaining module configured to read, when an operating instruction for lighting up the terminal's screen is detected, event information recorded by a predetermined application program installed on the terminal; and an information displaying module configured to display system time and the event information simultaneously.

In an embodiment, the predetermined application program comprises: a memo and/or a mail and/or a calendar and/or an alarm clock and/or a service-oriented application program.

In an embodiment, the event information comprises: a meeting schedule and/or an information reminding event and/or a service information.

In an embodiment, the information obtaining module comprises: a first reading sub-module configured to read a reminding event recorded by the memo installed on the terminal; and/or a second reading sub-module configured to read the meeting schedule recorded by the mail installed on the terminal; and/or a third reading sub-module configured to read the reminding event and/or the meeting schedule recorded by the calendar installed on the terminal; and/or a forth reading sub-module configured to read a clock alarm event recorded by the alarm clock installed on the terminal; and/or a fifth reading sub-module configured to read the service-oriented application program installed on the terminal, and to obtain an unfinished service information recorded by the service-oriented application program.

In an embodiment, the information displaying module is configured to process the event information based on current system time and displaying the processed event information.

In an embodiment, the information displaying module comprises: a first information displaying sub-module configured to, when the event information is the reminding event, determine a remaining time for reaching the reminding event based on the current system time, and display and remind a user about the remaining time for reaching the reminding event; and/or a second information displaying sub-module configured to, when the event information is the meeting schedule, determine a remaining time for reaching the meeting based on the current system time, and display and remind the user about the remaining time for reaching the meeting; and/or a third information displaying sub-module configured to, when the event information is the clock alarm event, determine a remaining time for reaching the clock alarm based on the current system time, then display and remind the user the existence of the clock alarm; and/or a forth information displaying sub-module configured to, when the event information is the service information, determine a waiting time until the service is available based on the current system time, and display and remind the user about the service information.

According to a third aspect of embodiments of the present invention, a device for information presentation is provided, comprising: a processor; a memory for storing instructions executable by the processor; wherein the processor is configured to perform any method according to the invention.

Embodiments of the invention may provide at least some of the following beneficial effects: in present technical solution, reading, when an operating instruction for lighting up the terminal's screen is detected, event information recorded by a predetermined application program installed on the terminal; and displaying system time and the event information simultaneously. So that the user can obtain the related event information without other operations after lighting up the screen. It is convenient for the user to query some event information concerned such as meeting schedule, information reminding event and/or service information.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for information presentation according to an exemplary embodiment.
Figs. 2-4 are diagrams illustrating the effect for information presentation according to an exemplary embodiment.
Fig. 5 is a block diagram illustrating a device for information presentation according to an exemplary embodiment.
Fig. 6 is a block diagram illustrating an information obtaining module shown in Fig. 5 according to an exemplary embodiment.
Fig. 7 is a block diagram illustrating an information displaying module shown in Fig. 5 according to an exemplary embodiment.
Fig. 8 is a block diagram illustrating a device for information presentation according to an exemplary embodiment.

The specific embodiments of the present invention are shown with the figures above, and that will be described in further detail below. These figures and description are for limiting the scope of the present invention in any way, but for illustrating the concept of the present invention for those of ordinary skill in the art by referring to the particular embodiments.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

The technical solution provided in embodiments of the present invention is applied in a terminal that may be an electronic device having displaying function, such as a mobile phone or tablet computer, but not limit to these. It is easy to understand that the present embodiments may be also applied in any mobile terminal which has a processor and displaying output device.

A method for information presentation applied in a terminal is provided in embodiments of the present invention the method comprising: reading, when an operating instruction for lighting up the terminal's screen is detected, event information recorded by a predetermined application program installed on the terminal; and displaying system time and the event information simultaneously. The user can obtain the related event information without other operations after lighting up the screen by implementation of the present method for information presentation. It is convenient for the user to query some event information concerned such as meeting schedule, information reminding event and/or service information.

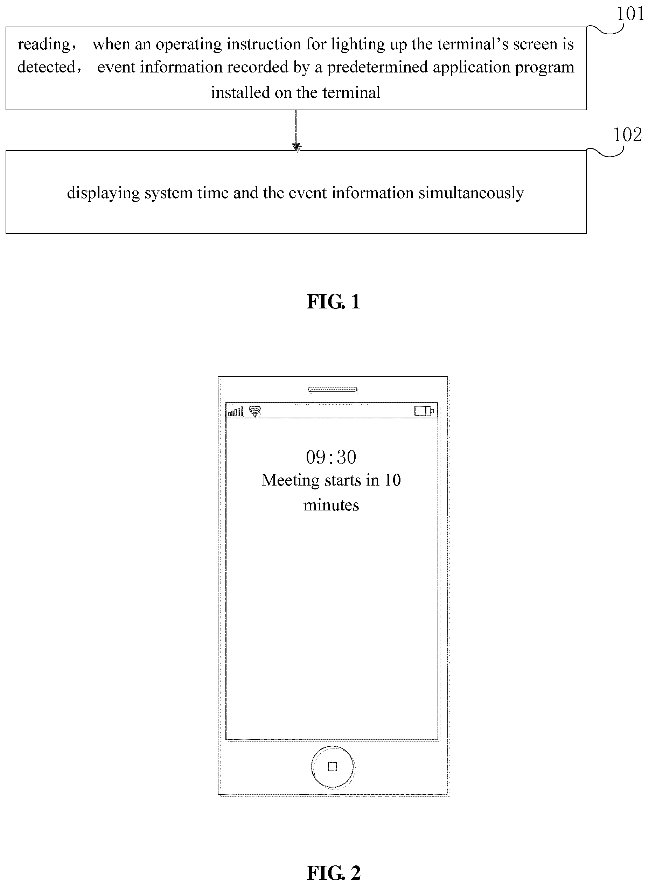

Fig. 1 is a flow diagram illustrating a method for information presentation according to an exemplary embodiment, the method for information presentation may be applied in a terminal which has displaying function such as a mobile phone. Referring to Fig. 1, the method for information presentation comprises steps as follows:

In step 101, reading, when an operating instruction for lighting up the terminal's screen is detected, event information recorded by a predetermined application program installed on the terminal.

In embodiments of the present invention, the predetermined application program comprises: a memo and/or a mail and/or a calendar and/or an alarm clock and/or a service-oriented application program. The service-oriented application may be an application providing some kind of service to the user, such as taxi booking apps, shopping apps etc.

In embodiments of the present invention, the event information comprises: a meeting schedule and/or an information reminding event and/or a service information.

In embodiments of the present invention, reading the event information recorded by the predetermined application program installed on the terminal comprises:
reading a reminding event recorded by the memo installed on the terminal; and/or
reading the meeting schedule recorded by the mail installed on the terminal; and/or
reading the reminding event and/or the meeting schedule recorded by the calendar installed on the terminal; and/or
reading a clock alarm event recorded by the alarm clock installed on the terminal; and/or reading the service-oriented application program installed on the terminal, and obtaining an unfinished service information recorded by the service-oriented application program.

In step 102, displaying system time and the event information simultaneously.

In embodiments of the present invention, system time as well as the event information recorded by the predetermined application are simultaneously displayed when lighting up the terminal's screen and, so that the user can obtain some service information such as reminding event, meeting information, alarm clock event and/or some unfinished service information when lighting up the screen. It is more convenient for user to obtain some important event information in this way.

In embodiments of the present invention, displaying the event information comprises: processing the event information based on current system time and displaying the processed event information.

Herein, processing the event information based on current system time and displaying the processed event information comprises:
when the event information is the reminding event, i.e. information reminding the user of an upcoming event, determining a remaining time for reaching the reminding (upcoming) event based on the current system time, and displaying and reminding a user about the remaining time for reaching the reminding event; and/or
when the event information is the meeting schedule, determining a remaining time for reaching the meeting based on the current system time, and displaying and reminding the user about the remaining time for reaching the meeting; and/or
when the event information is the clock alarm event, determining a remaining time for reaching the clock alarm based on the current system time, and displaying and reminding the user the existence of the clock alarm; and/or
when the event information is the service information, determining a waiting time until the service is available based on the current system time, and displaying and reminding the user about the service information.

As described above, a method for information presentation applied in a terminal is provided. In embodiments of the present invention the method may comprise: reading, when an operating instruction for lighting up the terminal's screen is detected, event information recorded by a predetermined application program installed on the terminal; and displaying system time and the event information simultaneously. The user can obtain the related event information without other operations after lighting up the screen by implementation of the present method for information presentation. It is convenient for the user to query some event information concerned such as meeting schedule, information reminding event and/or service information.

The following will illustrate the implementation of the above method for information presentation in combination with a usage scenario, as shown in Fig. 2-4, the diagrams illustrating the effect for information presentation given in the examples.

The embodiment as shown in Fig. 2 includes reading the meeting schedule recorded by the calendar installed on the terminal when an operating instruction for lighting up the terminal's screen is detected, extracting the appointed time of the meeting and determining the remaining time for reaching the meeting based on the current system time, and displaying the current system time and the reminding of the remaining time for reaching the meeting simultaneously when lighting up the screen, as shown in Fig.2, reminding the user "Meeting starts in 10 minutes". Of course, it can also extract the meeting topic in meeting schedule recorded by the calendar in specific implementation, and display the reminding of the remaining time for reaching the meeting as well as the reminding of the meeting topic simultaneously for the user.

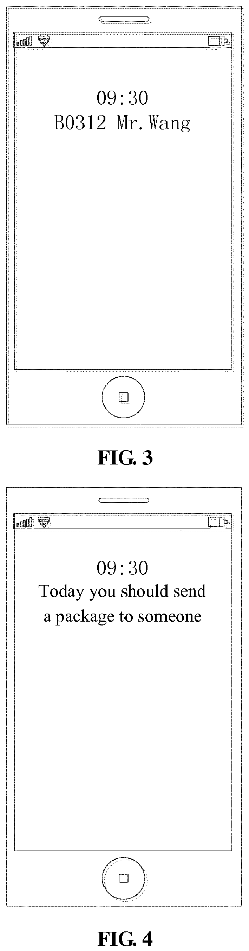

The embodiment as shown in Fig. 3 includes reading the service-oriented application program installed on the terminal when an operating instruction for lighting up the terminal's screen is detected, extracting the service information, and displaying the conceptual system time and the service information simultaneously when lighting up the screen, such as the plate number information and driver information provided in Fig.3. Of course, it can also display the charging information, the paying information, the information of the time from the driver arriving, or the information of the current position of the driver and the like in the service information in specific implementation.

The embodiment as shown in Fig. 4 includes reading the memo application installed on the terminal when an operating instruction for lighting up the terminal's screen is detected, reading the reminding event recorded by the memo, and displaying the conceptual system time and the reminding of the remaining event simultaneously when lighting up the screen, as shown in Fig.4, "Today you should send a package to someone", etc.

The above usage scenario is illustrated by reading event information recorded by certain predetermined application program when an operating instruction for lighting up the terminal's screen is detected, while it can read event information recorded by two or more predetermined application program, and display the actual system time and the two or more event information simultaneously in specific implementation.

In the following device embodiments of the present invention are described, which can be used according to the method embodiments of the present invention. Please refer to the method embodiments of the present invention for the details for the device embodiments.

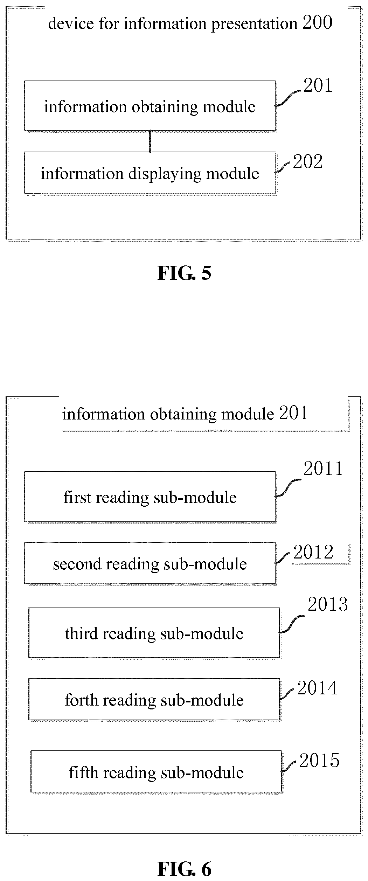

Fig. 5 is a block diagram illustrating a device for information presentation 200 according to an exemplary embodiment, which can be implemented as parts of or a whole terminal by software, hardware or the combination thereof. The terminal may be an electronic displaying device such as mobile phone. The device for information presentation 200 may comprise:
an information obtaining module 201 which can be configured to read, when an operating instruction for lighting up the terminal's screen is detected, event information recorded by a predetermined application program installed on the terminal;
an information displaying module 202 which can be configured to display system time and the event information simultaneously.

Wherein the predetermined application program comprises: a memo and/or a mail and/or a calendar and/or an alarm clock and/or a service-oriented application program.

Herein the event information comprises: a meeting schedule and/or an information reminding event and/or a service information.

As shown in Fig.6, in an embodiment, the information obtaining module 201 shown in Fig.5 may comprise:
a first reading sub-module 2011 which can be configured to read a reminding event recorded by the memo installed on the terminal; and/or
a second reading sub-module 2012 which can be configured to read the meeting schedule recorded by the mail installed on the terminal; and/or
a third reading sub-module 2013 which can be configured to read the reminding event and/or the meeting schedule recorded by the calendar installed on the terminal; and/or
a forth reading sub-module 2014 which can be configured to read a clock alarm event recorded by the alarm clock installed on the terminal; and/or
a fifth reading sub-module 2015 which can be configured to read the service-oriented application program installed on the terminal, and to obtain an unfinished service information recorded by the service-oriented application program.

In an embodiment, the information displaying module 202 can be configured to process the event information based on current system time and displaying the processed event information.

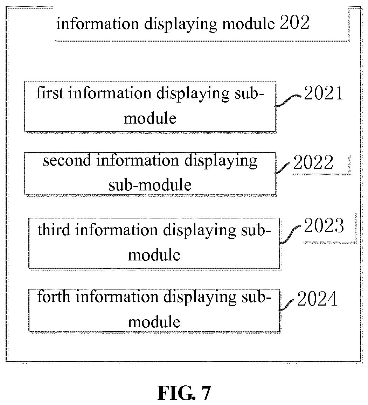

As shown in Fig.7, in an embodiment, the information displaying module 202 shown in Fig.5 may comprise:
a first information displaying sub-module 2021 which can be configured to, when the event information is the reminding event, determine a remaining time for reaching the reminding event based on the current system time, and display and remind a user about the remaining time for reaching the reminding event; and/or
a second information displaying sub-module 2022 which can be configured to, when the event information is the meeting schedule, determine a remaining time for reaching the meeting based on the current system time, and display and remind the user about the remaining time for reaching the meeting; and/or
a third information displaying sub-module 2023 which can be configured to, when the event information is the clock alarm event, determine a remaining time for reaching the clock alarm based on the current system time, then display and remind the user the existence of the clock alarm; and/or
a forth information displaying sub-module 2024 which can be configured to, when the event information is the service information, determine a waiting time till the service is available based on the current system time, and display and remind the user about the service information.

As described above, a method for information presentation applied in a terminal is provided in embodiments of the present invention the method may comprise: reading, when an operating instruction for lighting up the terminal's screen is detected, event information recorded by a predetermined application program installed on the terminal; and displaying system time and the event information simultaneously. The user can obtain the related event information without other operations after lighting up the screen by implementation of the present method for information presentation. It is convenient for the user to query some event information concerned such as meeting schedule, information reminding event and/or service information.

With respect to the devices in the above embodiments, the specific manners that the respective modules perform operations have been described in detail in the embodiments regarding the relevant methods, and will not be elaborated herein.

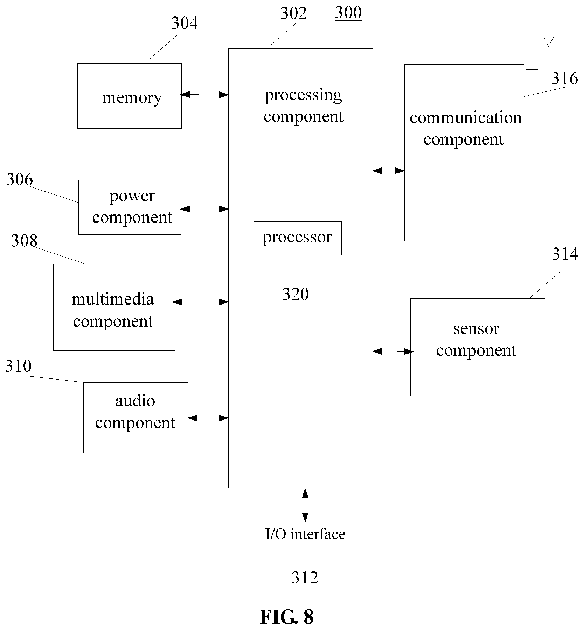

Fig. 8 is a block diagram illustrating a device 300 for information presentation according to an exemplary embodiment. For example, the device 300 may be a terminal apparatus such as mobile phone, tablet computer or smart television and the like.

Refer to Fig. 8, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power for the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive an external multimedia datum while the device 300 is in an operation mode, such as a photographing mode or a video mode. Each of the front camera and the rear camera may be a fixed optical lens system or have optical focusing and zooming capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, the peripheral interface modules being, for example, a keyboard, a click wheel, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components (e.g., the display and the keypad, of the device 300), a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of a nearby object without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as WiFi, 2G, or 3G, or a combination thereof. In an exemplary embodiment, the communication component 2016 receives a broadcast signal or broadcast associated information from an external broadcast management system via a broadcast channel. In an exemplary embodiment, the communication component 2016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 304, executable by the processor 320 in the device 300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by the processor of the device 300, causes the device 300 to perform the above described method for information presentation.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for information presentation, which is applied in a terminal, the method comprising:
reading (101), when an operating instruction for lighting up the terminal's screen is detected, event information recorded by a predetermined application program installed on the terminal;
displaying (102) system time and the event information simultaneously.

2. The method of claim 1, wherein the predetermined application program comprises: a memo and/or a mail and/or a calendar and/or an alarm clock and/or a service-oriented application program.

3. The method of claim 1 or 2, wherein the event information comprises: a meeting schedule and/or an information reminding event and/or a service information.

4. The method of claim 3, wherein reading (101) the event information recorded by the predetermined application program installed on the terminal comprises:
reading a reminding event recorded by the memo installed on the terminal; and/or
reading the meeting schedule recorded by the mail installed on the terminal; and/or
reading the reminding event and/or the meeting schedule recorded by the calendar installed on the terminal; and/or
reading a clock alarm event recorded by the alarm clock installed on the terminal; and/or
reading the service-oriented application program installed on the terminal, and obtaining an unfinished service information recorded by the service-oriented application program.

5. The method of any one of the preceding claims, wherein displaying (102) the event information comprises:
processing the event information based on current system time and displaying the processed event information.

6. The method of claim 5, wherein processing the event information based on current system time and displaying the processed event information comprises:
when the event information is the reminding event, determining a remaining time for reaching the reminding event based on the current system time, and displaying and reminding a user about the remaining time for reaching the reminding event; and/or
when the event information is the meeting schedule, determining a remaining time for reaching the meeting based on the current system time, and displaying and reminding the user about the remaining time for reaching the meeting; and/or
when the event information is the clock alarm event, determining a remaining time for reaching the clock alarm based on the current system time, and displaying and reminding the user the existence of the clock alarm; and/or
when the event information is the service information, determining a waiting time till the service is available based on the current system time, and displaying and reminding the user about the service information.

7. A device for information presentation, which is applied in a terminal, the device comprising:
an information obtaining module (201) configured to read, when an operating instruction for lighting up the terminal's screen is detected, event information recorded by a predetermined application program installed on the terminal;
an information displaying module (202) configured to display system time and the event information simultaneously.

8. The device of claim 7, wherein the predetermined application program comprises: a memo and/or a mail and/or a calendar and/or an alarm clock and/or a service-oriented application program.

9. The device of claim 7 or 8, wherein the event information comprises: a meeting schedule and/or an information reminding event and/or a service information.

10. The device of claim 9, wherein the information obtaining module (201) comprises:
a first reading sub-module (2011) configured to read a reminding event recorded by the memo installed on the terminal; and/or
a second reading sub-module (2012) configured to read the meeting schedule recorded by the mail installed on the terminal; and/or
a third reading sub-module (2013) configured to read the reminding event and/or the meeting schedule recorded by the calendar installed on the terminal; and/or
a forth reading sub-module (2014) configured to read a clock alarm event recorded by the alarm clock installed on the terminal; and/or
a fifth reading sub-module (2015) configured to read the service-oriented application program installed on the terminal, and to obtain an unfinished service information recorded by the service-oriented application program.

11. The device of any one of claims 7 to 10, wherein the information displaying module (202) is configured to process the event information based on current system time and displaying the processed event information.

12. The device of any one of claims 7 to 11, wherein the information displaying module (202) comprises:
a first information displaying sub-module (2021) configured to, when the event information is the reminding event, determine a remaining time for reaching the reminding event based on the current system time, and display and remind a user about the remaining time for reaching the reminding event; and/or
a second information displaying sub-module (2022) configured to, when the event information is the meeting schedule, determine a remaining time for reaching the meeting based on the current system time, and display and remind the user about the remaining time for reaching the meeting; and/or
a third information displaying sub-module (2023) configured to, when the event information is the clock alarm event, determine a remaining time for reaching the clock alarm based on the current system time, then display and remind the user the existence of the clock alarm; and/or
a forth information displaying sub-module (2024) configured to, when the event information is the service information, determine a waiting time till the service is available based on the current system time, and display and remind the user about the service information.

13. A device for information presentation, comprising:
a processor;
a memory for storing instructions executable by the processor;
wherein the processor is configured to perform a method according to any one of claims I to 6.

14. A computer program including instructions for executing the steps of a method for information presentation according to any one of claims 1 to 6 when said program is executed by a computer.

15. A non-transitory computer-readable storage medium having stored therein a computer program according to claim 14.
